(19) Europäisches Patentamt
European Patent Office
Office européen des brevets

(11) Publication number: **0 081 940**
**B1**

(12) **EUROPEAN PATENT SPECIFICATION**

(45) Date of publication of patent specification: **17.09.86**

(51) Int. Cl.⁴: **C 08 F 10/02,** C 08 F 4/62

(21) Application number: **82306351.6**

(22) Date of filing: **30.11.82**

(54) **Preparation of a catalyst for and a method of producing linear low density polyethylene.**

(30) Priority: **04.12.81 US 327534**

(43) Date of publication of application:
**22.06.83 Bulletin 83/25**

(45) Publication of the grant of the patent:
**17.09.86 Bulletin 86/38**

(84) Designated Contracting States:
**BE DE FR GB IT NL SE**

(56) References cited:
**GB-A-1 484 254**
**GB-A-2 006 232**
**US-A-3 787 384**
**US-A-4 148 754**
**US-A-4 302 566**

(73) Proprietor: **MOBIL OIL CORPORATION**
**150 East 42nd Street**
**New York New York 10017 (US)**

(72) Inventor: **Nowlin, Thomas Edward**
**139 Hickory Road**
**Somerset New Jersey 08873 (US)**
Inventor: **Wagner, Klaus Peter**
**28 Bradford Road**
**East Windsor New Jersey 08520 (US)**

(74) Representative: **West, Alan Harry et al**
**Mobil Court 3 Clements Inn**
**London WC2A 2EB (GB)**

**EP 0 081 940 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a preparation of a catalyst for and a method of producing linear low density polyethylene.

Linear low density polyethylene polymers possess properties which distinguish them from other polyethylene polymers such as homopolymers of polyethylene. Certain of these properties are described in the Anderson et al US—A—4,076,698.

The Karol et al US—A—4,302,566 describes a process for producing certain linear low density polyethylene polymers in a gas phase, fluid bed reactor.

The Graff US—A—4,173,547, Stevens et al US—A—3,787,384, Strobel et al US—A—4,148,754 and the Ziegler, deceased et al US—A—4,063,009 each describe various polymerization processes suitable for producing forms of polyethylene other than linear low density polyethylene, per se.

The Graff US—A—4,173,547 describes a supported catalyst obtained by treating a support with both an organoaluminum compound and an organomagnesium compound followed by contacting this treated support with a tetravalent titanium compound.

The Stevens et al US—A—3,787,384 and the Strobel et al US—A—4,148,754 describe a catalyst prepared by first reacting a support (e.g., silica containing reactive hydroxy groups) with an organomagnesium compound (e.g., a Grignard reagent) and then combining this reacted support with a tetravalent titanium compound. According to the teachings of both of these patents, no unreacted organomagnesium compound would seem to be present when the reacted support is contacted with the tetravalent titanium compound.

The Ziegler, deceased et al US—A—4,063,009 describes a catalyst which is the reaction product of an organomagnesium compound (e.g., an alkylmagnesium halide) with a tetravalent titanium compound. This reaction with the tetravalent titanium compound takes place in the absence of a support material.

In one aspect, the present invention resides in a process for preparing a catalyst for use in the production of linear low density polyethylene, comprising the steps of:

a) transferring magnesium from a liquid medium onto a solid porous carrier in contact with the liquid medium, the carrier containing reactive, surface hydroxyl groups, the liquid medium containing at least one organomagnesium composition having the empirical formula $R_nMgR'_{(2-n)}$, where R is a stable organic moiety and R′ is a stable organic moiety or a halogen atom, and n is a rational number between 0.5 and 2, the number of moles of magnesium in said liquid medium exceeding the number of moles of reactive hydroxyl groups contained by the carrier, and the magnesium being transferred in chemically combined form onto the carrier by reaction between the organomagnesium composition and the surface hydroxyl groups and by precipitation onto the carrier to produce a supported magnesium composition, and

b) reacting the supported magnesium composition produced in step (a) with at least one tetravalent titanium compound in a liquid medium such that the molar ratio of the titanium compound in the liquid medium to the magnesium in the supported magnesium composition is greater than unity, the tetravalent titanium compound being soluble in said liquid medium, and said supported magnesium composition being insoluble in said liquid medium, the reaction producing on said carrier a reacted form of titanium which is insoluble in said liquid medium.

In a further respect, the invention resides in a method of producing linear low density polyethylene polymer utilizing a catalyst prepared by the process of said one aspect of the present invention.

In accordance with the present invention, titanium is incorporated onto a suitable support by impregnating this support with reactive magnesium and utilizing this supported reactive magnesium to react with tetravalent titanium (e.g., titanium in the plus 4 valence state) in a liquid medium. Unreacted titanium is soluble in this liquid medium, while reacted titanium and supported reactive magnesium are insoluble in this liquid medium.

As used herein, the concept of supporting a material on a carrier is intended to connote the incorporation of material (e.g., magnesium compositions and/or titanium compositions) onto the carrier by physical and chemical means. Accordingly, supported material need not necessarily be chemically bound to the carrier.

Catalysts produced according to the present invention may be described in terms of the manner in which they can be made. More particularly, these catalysts can be described in terms of the manner in which a suitable carrier may be treated in order to form such catalysts.

Suitable carrier materials which may be treated include solid, porous carrier materials such as silica, alumina and combinations thereof. Such carrier materials may be amorphous or crystalline in form and preferably have a particle size of from 0.1 μm to 200 μm, more preferably from 10 to 80 μm. The most preferred carrier material is spray dried silica with spherical particles. The internal porosity of these carriers may be larger than 0.2 $cm^3/g$, preferably larger than 0.6 $cm^3/g$. The specific surface area of these carriers may be larger than 50 $m^2/g$, preferably from 150 to 1500 $m^2/g$.

It is desirable to remove physically bound water from the carrier material prior to contacting this material with water-reactive magnesium compounds. This water removal may be accomplished by heating the carrier material to a temperature from 100°C to an upper limit of temperature represented by the temperature at which change of state or sintering occurs. A suitable range of temperatures may, thus, be from 100°C to 800°C, e.g., from 150°C to 250°C.

Chemically bound water, as represented by a presence of OH groups in the carrier, is present when the carrier is contacted with water-reactive magnesium compounds. This chemically bound water may be present as 0.3 to 5 mmoles, and preferably 0.3 to 0.7 mmoles of OH groups per gram of carrier. Excess OH groups present in the carrier may be removed by heating the carrier for a sufficient time at a sufficient temperature to accomplish the desired removal. More particularly, for example, a relatively small number of OH groups may be removed by sufficient heating at from 150°C to 250°C, whereas a relatively large number of OH groups may be removed by sufficient heating at at least 500 or 600°C, most especially, about from 750°C to 850°C. The duration of heating may be overnight, e.g., 16 hours or a shorter period, e.g., at least 4 hours. The surface hydroxyl concentration of silica may be determined according to J. B. Peri and A. L. Hensley, Jr., *J. Phys. Chem., 72* (8), 2926 (1968).

Examples of suitable carrier materials are described in the Graff, US—A—4,173,547 (note particularly the passage extending from column 3, line 62 to column 5, line 44 of the Graff patent). It is to be noted that internal porosity of carriers can be determined by a technique termed BET-technique, described by S. Brunauer, P. Emmett and E. Teller in *Journal of the American Chemical Society*, 60, pp. 209—319 (1938). Specific surface areas of carriers can also be measured in accordance with the above-mentioned BET-technique, with use of the standardized method as described in *British Standards* BS 4359, Volume 1, (1969).

Further examples of carrier materials are given in the Stevens et al., US—A—3,718,636 (note particularly the passage extending from line 12 to line 29 of column 3 of the Stevens et al patent). Also included as examples of carrier materials are polymeric silicas known as polysiloxanes.

An example of a preferred carrier is silica which has been dehydrated by fluidizing with nitrogen and heating at about 800°C for about 16 hours to achieve a surface hydroxyl concentration of about 0.5 mmol/g. The silica used may be a high surface area, amorphous silica (surface area=300 $m^2/g$; pore volume of 1.65 $cm^3$ per gram) marketed under the tradename Davison 952 by the Davison Division of W. R. Grace and Co.

The dehydrated carrier material is then further treated by impregnating same with a solid magnesium containing composition which is capable of reacting with a tetravalent titanium compound. One such magnesium containing material is an organomagnesium composition of the formula $R_nMgR'_{(2-n)}$, where R and R' are the same or different and represent stable organic moieties, provided that R' may also be halogen, and n is a rational number from about 0.5 to 2. A particular example of a solution of such an organomagnesium composition is a Grignard reagent.

Grignard reagents are described in *Organic Chemistry*, Second Edition, Morrison and Boyd, fifth printing, May 1968, pp. 112—114 and 516—521. Grignard reagents are known to react with organic molecules or moieties which have hydrogen bonded directly to a nitrogen or oxygen atom. Furthermore, Grignard reagents are also known to react with organic molecules or moieties containing carbonyl groups, cyano groups and nitro groups. Accordingly, stable organic moieties as defined by R in the above-mentioned formula generally would not have any of the above-mentioned groups indicated as being reactive with Grignard reagents. Thus, examples of R and R' include $C_1$—$C_{12}$ hydrocarbyl groups (e.g., $C_1$—$C_{12}$ alkyl or $C_6$—$C_{12}$ aryl) or $C_1$—$C_{12}$ alkoxy groups, which may be unsubstituted or substituted, e.g., with one or more of halogen (e.g., F, Cl, Br or I), $C_1$—$C_{12}$ alkoxy, etc. A preferred composition according to the formula $R_nMgR'_{(2-n)}$ is ethylmagnesium chloride.

It is noted that even a Grignard reagent of ethylmagnesium chloride may contain a mixture of molecules other than ethylmagnesium chloride, per se. For example, particularly under the influence of various liquids or solvent systems, ethylmagnesium chloride may disproportionate to form essentially a mixture of magnesium dichloride and diethylmagnesium. Such mixtures are intended to be encompassed within the formula $R_nMgR'_{(2-n)}$. Accordingly, it will be understood that compositions of the formula $R_nMgR'_{(2-n)}$ and compositions representative thereof are intended herein to represent the overall empirical formula of these compositions rather than to set forth the molecular formula of these compositions.

A preferred means of impregnating the carrier with the solid, reactive magnesium-containing composition is by contacting the carrier with a liquid medium in which organomagnesium composition of the formula $R_nMgR'_{(2-n)}$ is dissolved. The magnesium is then incorporated into the pores of the carrier by (1) a reaction of the organomagnesium composition with the carrier and by (2) a precipitation of magnesium from the organomagnesium composition onto the carrier.

Organomagnesium compositions corresponding to those found in Grignard reagents have the formula RMgX, where R is as defined hereinabove and X is halogen, (e.g., Cl, Br or I), and are soluble in ethers. Examples of such ethers are mentioned in column 4, lines 32—49 of the Yamaguchi et al. US—A—3,989,881 and include aliphatic ethers, such as diethyl ether, diisopropyl ether, dibutyl ether, dipentyl ether and ethyl-n-butyl ether; and cyclic ethers such as tetrahydrofuran and dioxane. It has been suggested that the reason for the solubility of such organomagnesium compositions (e.g., $C_2H_5MgCl$) in ethers (e.g., diethyl ether) is the ability of the magnesium atom to act as a Lewis acid and to associate with at least one electron pair from the etheric oxygen which acts as a Lewis base. Such an association is represented as follows:

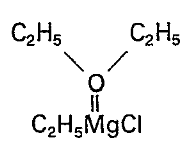

Although organomagnesium compounds of the formula RMgX tend to be insoluble in non-Lewis base solvents such as hexane, these organomagnesium compounds may be completely soluble in mixed solvent systems such as hexane/tetrahydrofuran, provided that a sufficient solubilizing amount of the Lewis base solvent is present. Thus, the carrier may be slurried in a non-Lewis base co-solvent and an organomagnesium compound may be added thereto in the form of an ether solution thereof. Examples of non-Lewis base co-solvents are given in the passage extending from column 6, line 61 to column 7, line 8 of the Graff US—A—4,173,547. These co-solvents include straight or branched saturated aliphatic hydrocarbons, such as butanes, pentanes, hexanes, heptanes, or commonly available mixtures thereof, generally known as gasoline, kerosene, gas, oil or other petroleum fractions. Further, such co-solvents include cyclic hydrocarbons, such as cyclopentane, cyclohexane, methylcyclohexane, as well as aromatic hydrocarbons, such as benzene or halogen-aromatic hydrocarbons such as chlorobenzene. Such co-solvents should preferably not contain groups which are reactive with the organomagnesium composition. A preferred co-solvent is n-hexane.

More preferably, the carrier is impregnated with the magnesium composition by suitably contacting the carrier with a liquid containing organomagnesium composition of the formula $R_nMgR'_{(2-n)}$ in a partially dissolved state. More particularly, the carrier may be slurried in one of the above-exemplified non-Lewis base co-solvents, such as hexane, and a solution of Grignard in ether may be added thereto, the amount of ether relative to the amount of co-solvent being sufficient to only partially solubilize the Grignard. The non-soluble portion of the Grignard may be in the form of dihalomagnesium, the amount of this non-soluble dihalomagnesium being essentially equivalent to the amount of dialkylmagnesium which is soluble in the solvent/co-solvent mixture.

It is noted that if the organomagnesium compound is only sparingly soluble, e.g., to the extent of even 1 percent or less, reactive organomagnesium which is consumed by reactive hydroxyl sites on the carrier will be replaced by further dissolution of undissolved organomagnesium by a mass action effect.

Another means of impregnating is to slurry the carrier in a Lewis base solvent such as an ether and to add a solution of organomagnesium in ether to this slurry. The addition of organomagnesium/ether solution to ether or co-solvent/carrier slurry may take place as a continuous dropwise addition while the liquid medium of the slurry is maintained under reflux conditions. Upon such addition, dissolved organomagnesium composition reacts with the carrier at the site of reactive OH groups appearing on the available surface area of the carrier. Such a reaction may be demonstrated with respect to ethylmagnesium chloride as follows:

$$\text{CARRIER—OH} + C_2H_5MgCl \rightarrow \text{CARRIER—OMgCl} + C_2H_6$$

Part of the magnesium composition incorporated onto the carrier is produced by precipitating magnesium from the organomagnesium-containing liquid medium in contact with the carrier. This precipitation may take place by any possible convenient means including cooling of the solvent, using a sufficiently large amount of non-solvent in the initial slurry, adding non-solvent to the slurry or stripping off the solvent. In the case of a carrier slurry where the liquid medium is essentially a hexane/tetrahydrofuran solution of ethylmagnesium chloride, it is preferred to precipitate ethylmagnesium chloride onto the carrier by distillation of the solvent. In this regard, it is noted that tetrahydrofuran and hexane have nearly equivalent boiling points. Thus, it is to be expected that during the course of distillation, the ratio of tetrahydrofuran to hexane in the liquid state will remain essentially constant. On the other hand, if the boiling point of the co-solvent is significantly greater than the boiling point of the ether, then the relative concentration of co-solvent may increase appreciably as the distillation proceeds. In such a case, a non-uniform precipitation of magnesium may occur, such that any magnesium dihalide which is present tends to precipitate before organomagnesium is precipitated.

Accordingly, magnesium is incorporated onto the carrier both by reaction and by precipitation, the reaction taking place between reactive hydroxyl groups of the carrier and the organomagnesium composition. The molar ratio of organomagnesium composition used to impregnate the carrier with respect to the hydroxyl groups of the carrier is preferably from 0.5 to 3. More preferably an excess of organomagnesium is used and this ratio is from 1.1 to 2.5.

Whether magnesium is in the form of a reaction product with the carrier or in the form of a non-reacted precipitate, it is to be noted that this supported magnesium may, optionally, be in the form of a complex with one or more electron donating agents (i.e. Lewis bases). More particularly, when ethylmagnesium chloride is precipitated from a hexane/tetrahydrofuran solution, each mole of ethylmagnesium chloride precipitated may be complexed with approximately one mole of tetrahydrofuran. In more general terms, when an organomagnesium composition is precipitated from a solution containing an ether, the resulting precipitate may have molecules of this ether complexed with molecules of the organomagnesium composition.

The amount of magnesium composition which is impregnated onto the carrier should be sufficient to react with tetravalent titanium in order to incorporate a catalytically effective amount of titanium on the carrier in the manner set forth hereinbelow. More particularly, for example, from 0.1 to 50, preferably from 0.1 to 5, mmoles of magnesium are impregnated per gram of carrier initially present. When a solution of an organomagnesium composition is contacted with a carrier the amount of magnesium in this solution in

terms of mmoles may be essentially the same as that stated above with respect to that which is impregnated onto the carrier.

When a non-Lewis base co-solvent is used to slurry the carrier, from 2 to 100 mls of the co-solvent may be present per gram of carrier. A preferred narrower range would be from 5 to 15 mls of co-solvent per gram of carrier.

The amount and concentration of organomagnesium/ether solution which is added to the co-solvent/carrier slurry are preferably sufficient to assure that the organomagnesium composition is at least partially soluble in the co-solvent/solvent system. This amount is of course dependent upon many factors such as the composition of solvents and organomagnesium, the temperature of the co-solvent/solvent system. However, it will be readily understood that the selection of proper amounts and concentrations of organomagnesium/ether solutions is well within the ability of those of ordinary skill in the art. More particularly, for example, when an ethylmagnesium chloride/tetrahydrofuran solution is added to a hexane/carrier slurry, the concentration of the ethylmagnesium chloride/tetrahydrofuran solution may be from 0.1 to 10 Molar, more preferably from 1 to 3 Molar.

For example, when 107 g of silicic acid are suspended in 500 ml of n-heptane and 342 ml of a solution of 172 mmols of n-propyl magnesium chloride in diethyl ether are added thereto in accordance with Example 1 of the Strobel et al US—A—4,148,754, the n-propyl magnesium chloride may well be totally soluble in the n-heptane/diethyl ether mixture. However, when 15 g of silica are slurried in 200 ml of n-hexane and 50 ml of a 2.0 molar solution of ethylmagnesium chloride in tetrahydrofuran is added thereto in accordance with Example 1 given herein, infra, the ethylmagnesium chloride appears to be only partially soluble in the n-hexane/tetrahydrofuran mixture.

It is to be noted that ball milling is not used to achieve the desired impregnation of catalyst onto the carrier. Thus a ball milling process may tend to disrupt the particle size and morphology of the carriers whereas, since the catalysts of the present invention are preferably capable of being used in gas phase, fluid bed polymerization, the particle size and morphology of the catalyst may be rather critical.

The solid supported magnesium-containing composition is preferably in the form of a free-flowing powder when dry. It is important to note that when the carrier is impregnated by the above-exemplified methods neither the carrier nor the magnesium is contacted with ether an organoaluminum compound or an aluminum halide compound. In fact, such a treatment with a significant amount of an organoaluminum compound or an aluminum halide compound is preferably avoided.

The carrier treated with an organomagnesium composition according to the above-exemplified methods is subsequently reacted with a tetravalent titanium compound in a liquid medium. The tetravalent titanium compound is soluble in this liquid reaction medium, while the treated carrier, including the magnesium containing portion thereof, is insoluble in this liquid reaction medium. Thus, the reaction which takes place between the tetravalent titanium and the reactive magnesium-containing composition is a reaction of a solid with a liquid. It is further noted that the reacted titanium is insoluble in the liquid reaction medium.

The reaction which takes place between the solid, supported organomagnesium compound and tetravalent titanium in the liquid reaction medium is understood to be essentially an oxidation/reduction reaction, wherein the organomagnesium composition acts as a reducing agent for the tetravalent titanium. On the other hand, while not wishing to be bound by any particular theory or chemical mechanism, the reaction which takes place between (1) tetravalent titanium and (2) the reaction product of a Grignard reagent and carrier containing reactive OH groups is not believed to be an oxidation/reduction reaction. However, it is noted that both of the above-mentioned reactions lead to the incorporation of titanium onto the treated carrier.

Examples of tetravalent titanium compounds, which may be used in the liquid reaction medium, are given in the passage extending from line 35 to line 54 of column 6 of the Graff US—A—4,173,547. Such examples include titanium halides (e.g., where the halide portion thereof is Cl or Br), titanium alkoxides (e.g., where the alkoxide portion thereof is a $C_1$—$C_6$ alkoxide), or mixtures thereof. A preferred tetravalent titanium compound is $TiCl_4$.

It may also be possible to replace some or all of the above-mentioned tetravalent titanium compounds with one or more other transition metal compounds. Such other transition metal compounds are exemplified in the passage extending from line 55 to line 60 of column 6 of the Graff et al US—A—4,173,547. Preferred transition metal compounds include zirconium compounds (e.g., $ZrCl_4$) and, especially, vanadium compounds (e.g., $VCl_3$).

The liquid portion of the liquid reaction medium is preferably a solution of the tetravalent titanium compound in a solvent which may be one or more of the organic liquids exemplified above as being suitable for use as a co-solvent in the impregnation of the carrier with reactive magnesium composition. A preferred solvent for the tetravalent titanium compound is n-heptane.

The reaction of the tetravalent titanium compound in the liquid medium conveniently takes place by slurrying the solid carrier containing the reactive magnesium composition in a solution of the tetravalent titanium compound and heating the liquid reaction medium to a suitable reaction temperature, e.g., to the reflux temperature of the solvent at standard atmospheric pressure. Thus, the reaction may take place under reflux conditions.

The various reaction parameters are subject to a wide variety of possibilities, suitable selection of such

parameters being well within the skill of those having ordinary skill in the art. However, for example, the volume of tetravalent titanium solution to treated carrier initially slurried in the solution may be from 0.1 to 10 mls per gram of such carrier. The amount of tetravalent titanium in solution should be in excess of the molar amount of organomagnesium earlier used to treat the carrier. More particularly, the molar ratio of tetravalent titanium to organomagnesium may be from 1 to 10, more preferably from 3 to 6. These ratios given for tetravalent titanium to organomagnesium are also generally representative of acceptable ratios for tetravalent titanium to measurable hydroxyl groups on the carrier. Unreacted titanium may be removed by suitable separation techniques such as decantation, filtration and washing.

The supported catalyst may be activated with suitable activators. Such suitable activators include those organometallic compounds described in the passage extending from column 4, line 45 to column 5, line 12 of the Stevens et al US—A—3,787,384 and in the passage extending from column 4, line 56 to column 5, line 59 of the Strobel et al US—A—4,148,754. A preferred activator is triethylaluminum.

The catalyst may be activated in situ by adding the activator and catalyst separately to the polymerization medium. It is also possible to combine the catalyst and activator before introduction into the polymerization medium, e.g., for up to 2 hours at a temperature from −40 to 80°C. Still other types of combinations of catalysts and activators are possible (note the passage extending from line 50 to line 60 in column 5 of the Stevens et al U.S. Patent No. 3,787,384).

A suitable amount of the activator is from 1 to 100 and preferably greater than 5 moles of activator per gram atom of titanium in the catalyst (note the passage extending from column 5, line 71 to column 6, line 2 of the Stevens et al US—A—3,787,384).

Alpha-olefins may be polymerized with the catalysts prepared according to the present invention by any suitable known process. Such processes include polymerizations carried out in suspension, in solution or in the gas phase.

The molecular weight of the polymer may be controlled in a known manner, preferably by using hydrogen particularly when the polymerization is carried out at relatively low temperatures, e.g., from 30 to 105°C. This control of molecular weight may be evidenced by a measurable positive melt index for the polymer produced.

The catalysts prepared according to aspects of the present invention are highly active and may have an activity of at least 5.8 and preferably from 5.8 to 11.6 in terms of grams of polymer produced per hour per mmole of Ti per kPa of ethylene pressure.

The catalysts prepared according to aspects of the present invention are particularly useful for the production of linear low density polyethylene polymers. Such linear low density polyethylene polymers may have a density of 0.94 g/cm$^3$ or less, preferably 0.930 or less or even 0.925 g/cm$^3$ or less. In certain cases, it is possible to achieve densities of less than 0.915 g/cm$^3$ and even 0.900 g/cm$^3$ or less.

These linear low density polyethylene polymers may be polymers of ethylene with one or more $C_3$—$C_{10}$ alpha-olefins. Thus, copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1-butene terpolymers. When propylene is employed as a comonomer, the resulting linear low density polyethylene polymer preferably has at least one other alpha-olefin comonomer having at least four carbon atoms in an amount of at least 1 percent by weight of the polymer.

The linear low density polyethylene polymers produced preferably contain at least 80 percent by weight of ethylene units.

A particularly desirable method for producing linear low density polyethylene polymers is in the gas phase via a fluid bed reactor. In such a gas phase process, the polymerization reaction is conducted by contacting a stream of the monomers, substantially in the absence of catalyst poisons such as moisture, oxygen, CO, $CO_2$, and acetylene, with a catalytically effective amount of the completely activated catalyst at a temperature and at a pressure sufficient to initiate the polymerization reaction. In order to achieve the desired density ranges in the copolymer it is necessary to copolymerize enough of the $\geq C_3$ comonomers with ethylene to achieve a level of $>0$ to not more than 10 mol percent of the $C_3$ to $C_8$ comonomer in the copolymer. The amount of comonomer needed to achieve this result will depend on the particular comonomer(s) employed.

In accordance with the invention, it has unexpectedly been found that using a gas phase catalytic polymerization reaction, 1-hexene (e.g. normal 1-hexene, and/or 4-methyl-1-pentene) can be incorporated into an ethylene polymer chain with high efficiency and in amounts up to 20% by weight, preferably 5 to 11% by weight, to produce linear low density polyethylene having a density of less than 0.930 g/cm$^3$. The reaction is preferably conducted in a fluid bed reactor using the catalyst according to the invention, particularly where polymers having a density 0.920 g/cm$^3$ are required. However, where higher densities are desired, it is possible to employ catalysts in which the only magnesium present is reacted with the carrier (i.e. in the substantial absence of precipitated magnesium) and/or where the titanium compound is reacted with the supported magnesium composition in a molar ratio of 1 or less with the magnesium.

In the accompanying drawings,

Figure 1 is a diagrammatic illustration of a fluid bed process for producing linear low density polyethylene (LLDPE).

Figure 2 is a graph showing the variation in the density of LLDPE polymers according to the magnesium content of the polymerization catalyst of the invention,

Figure 3 is a graph showing the variation in density of LLDPE polymers with the ratio of butene to ethylene in the feed using a prior art catalyst and a catalyst according to the invention, and

Figures 4 and 5 are graphs showing the variation in density of LLDPE polymers with the ratio of hexene to ethylene in the feed using a prior art catalyst and catalysts according to the invention.

Referring to Figure 1, the fluidized bed process is conducted in a reactor 10 which consists of a reaction zone 12 and a velocity reduction zone 14.

The reaction zone 12 comprises a bed of growing polymer particles, formed polymer particles and a minor amount of catalyst particles fluidized by the continuous flow of polymerizable and modifying gaseous components in the form of make-up feed and recycle gas through the reaction zone. To maintain a viable fluidized bed, the mass gas flow rate through the bed must be above the minimum flow required for fluidization, and preferably from 1.5 to 10 times $G_{mf}$ and more preferably from 3 to 6 times $G_{mf}$. $G_{mf}$ is used in its accepted form as the abbreviation for the minimum mass gas flow required to achieve fluidization, C. Y. Wen and Y. H. Yu, "Mechanics of Fluidization", Chemical Engineering Progress Symposium Series, Vol. 62, p. 100—111 (1966).

It is important that the bed always contains particles to prevent the formation of localized "hot spots" and to entrap and distribute the particulate catalyst throughout the reaction zone. On start up, the reaction zone is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of the desired polymer particles supplants the start-up bed.

The partially or completely activated precursor compound (the catalyst) used in the fluidized bed is preferably stored for service in a reservoir 32 under a blanket of a gas which is inert to the stored material, such as nitrogen or argon.

Fluidization is achieved by a high rate of gas recycle to and through the bed, typically about 50 times the rate of feed of make-up gas. The fluidized bed has the general appearance of a dense mass of viable particles in possible free-vortex flow as created by the percolation of gas through the bed. The pressure drop through the bed is equal to or slightly greater than the mass of the bed divided by the cross-sectional area. It is thus dependent on the geometry of the reactor.

Make-up gas is fed to the bed at a rate equal to the rate at which particulate polymer product is withdrawn. The composition of the make-up gas is determined by a gas analyzer 16 positioned above the bed. The gas analyzer determines the composition of the gas being recycled and the composition of the make-up gas is adjusted accordingly to maintain an essentially steady state gaseous composition within the reaction zone.

To insure complete fluidization, the recycle gas and, where desired, part of the make-up gas are returned to the reactor at point 18 below the bed. There exists a gas distribution plate 20 above the point of return to aid fluidizing in the bed.

The portion of the gas stream which does not react in the bed constitutes the recycle gas which is removed from the polymerization zone, preferably by passing it into the velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates and prevent dust from contacting heat transfer surfaces and compressor blades.

The recycle gas is then compressed in a compressor 25 and then passed through a heat exchanger 26 wherein it is stripped of heat of reaction before it is returned to the bed. By constantly removing heat of reaction, no noticeable temperature gradient appears to exist within the upper portion of the bed. A temperature gradient will exist in the bottom of the bed in a layer of 6 to 12 inches (15.24 to 30.5 cm), between the temperature of the inlet gas and the temperature of the remainder of the bed. Thus, it has been observed that the bed acts almost immediately to adjust the temperature of the recycle gas above this bottom layer of the bed zone to make it conform to the temperature of the remainder of the bed thereby maintaining itself at an essentially constant temperature under steady state conditions. The recycle is then returned to the reactor at its base 18 and to the fluidized bed through distribution plate 20. The compressor 25 can also be placed upstream of the heat exchanger 26.

The distribution plate 20 plays an important role in the operation of the reactor. The fluidized bed contains growing and formed particulate polymer particles as well as catalyst particles. As the polymer particles are hot and possibly active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, a plate of the bubble cap type, and the like. The elements of the plate may all be stationary, or the plate may be of the mobile type disclosed in US—A—3,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

Hydrogen may be used as a chain transfer agent in the polymerization reaction. The ratio of hydrogen/ethylene employed may vary between 0 to 2.0 moles of hydrogen per mole of the monomer in the gas stream.

Any gas inert to the catalyst and reactants can also be present in the gas stream. The activator compound is preferably added to the reaction system at the hottest portion of the gas which is usually downstream from heat exchanger 26. Thus, the activator may be fed into the gas recycle system from dispenser 27 through line 27A.

Compounds of the structure $Zn(R_a)(R_b)$, wherein $R_a$ and $R_b$ are the same or different $C_1$ to $C_{14}$ aliphatic or aromatic hydrocarbon radicals, may be used in conjunction with hydrogen as molecular weight control or chain transfer agents, that is, to increase the melt index values of the copolymers that are produced. Conveniently 0 to 50, and preferably 20 to 30, mols of the Zn compound (as Zn) would be used in the gas stream in the reactor per mol of titanium compound (as Ti) of the catalyst in the reactor. The zinc compound would be introduced into the reactor preferably in the form of a dilute solution (2 to 30 weight percent) in hydrocarbon solvent or absorbed on a solid diluent material, such as silica, of the types described above, in amounts of 10 to 50 weight percent. These compositions tend to be pyrophoric. The zinc compound may be added alone, or with any additional portions of the activator compound that are to be added to the reactor from a feeder, not shown, which could be positioned adjacent dispenser 27, near the hottest portion of the gas recycle system.

It is important to operate the fluid bed reactor at a temperature below the sintering temperature of the polymer particles. For the production of ethylene copolymers an operating temperature of 30° to 115°C is preferred, and a temperature of 75° to 95°C is most preferred. Temperatures of 75° to 90°C are used to prepare products having a density of 0.91 to 0.92, and temperatures of 80° to 100°C are used to prepare products having a density of $>0.92$ to 0.94, and temperatures of 90° to 115°C are used to prepare products having a density of $<0.94$ to 0.96.

The fluid bed reactor is operated at pressures of up to 1000 psi (6895 kPa), and is preferably operated at a pressure of from 150 to 350 psi (1034 to 2413 kPa), with operation at the higher pressures in such ranges favoring heat transfer since an increase in pressure increases the unit volume heat capacity of the gas.

The partially or completely activated catalyst is injected into the bed at a rate equal to its consumption at a point 30 which is above the distribution plate 20. Injecting the catalyst at a point above the distribution plate is important since the catalyst is highly active and hence injection of the fully activated catalyst into the area below the distribution plate may cause polymerization to begin there and eventually cause plugging of the distribution plate. Injection into the viable bed, instead, aids in distributing the catalyst throughout the bed and tends to preclude the formation of localized spots of high catalyst concentration which may result in the formation of "hot spots".

A gas which is inert to the catalyst such as nitrogen or argon is used to carry the partially or completely activated catalyst composition, and any additional activator compound or non-gaseous chain transfer agent that is needed, into the bed.

The production rate of the bed is controlled by the rate of catalyst injection. The production rate may be increased by simply increasing the rate of catalyst injection and decreased by reducing the rate of catalyst injection.

Since any change in the rate of catalyst injection will change the rate of generation of the heat of reaction, the temperature of the recycle gas is adjusted upwards or downwards to accommodate the change in rate of heat generation. This insures the maintenance of an essentially constant temperature in the bed. Complete instrumentation of both the fluidized bed and the recycle gas cooling system is therefore used to detect any temperature change in the bed so as to enable the operator to make a suitable adjustment in the temperature of the recycle gas.

Under a given set of operating conditions, the fluidized bed is maintained at essentially a constant height by withdrawing a portion of the bed as product at a rate equal to the rate of formation of the particulate polymer product. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at a point 34 at or close to the distribution plate 20 and in suspension with a portion of the gas stream which is vented before the particulates settle to preclude further polymerization and sintering when the particles reach their ultimate collection zone. The suspending gas may also be used, as mentioned above, to drive the product of one reactor to another reactor.

The particulate polymer product is conveniently and preferably withdrawn through the sequential operation of a pair of timed valves 36 and 38 defining a segregation zone 40. While valve 38 is closed, valve 36 is opened to emit a plug of gas and product to the zone 40 between it and valve 36 which is then closed. Valve 38 is then opened to deliver the product to an external recovery zone. Valve 38 is then closed to await the next product recovery operation.

Finally, the fluidized bed reactor is equipped with a venting system to allow venting the bed during start up and shut down. The reactor does not require the use of stirring means and/or wall scraping means.

The highly active supported catalyst system of this invention appears to yield a fluid bed product

having an average particle size between 0.005 to 0.07 inches (0.01 to 0.18 cm) and preferably 0.02 to 0.04 inches (0.05 to 0.10 cm).

The feed stream of gaseous monomer, with or without inert gaseous diluents, is fed into the reactor at a space time yield of 2 to 10 pounds/hour/cubic foot (32 to 160 kg/hour/$m^3$) of bed volume.

The term virgin resin or polymer as used herein means polymer, in granular form, as it is recovered from the polymerization reactor.

The invention will now be more particularly described with reference to the following Examples.

Example 1

All procedures were carried out in glass or quartz equipment under purified nitrogen using predried nitrogen purged solvents.

Davison silica gel, Grade 952, was dehydrated by fluidizing with nitrogen, heating at 200°C for two hours and cooling to room temperature. The heated silica was believed to contain about 3 mmoles of OH groups per gram of silica.

15 g of this product was slurried in 200 ml n-hexane. A 2.0 molar solution of ethylmagnesium chloride in tetrahydrofuran (50 ml, 100 mmoles) was added dropwise to the refluxing slurry over approximately 20 minutes, after which time refluxing was continued for a further 30 minutes. The solvents were distilled off, giving 29.5 g of dry free-flowing powder.

15 g of this product (50.8 mmoles of Mg) was slurried in a 0.57 Molar solution of $TiCl_4$ in heptane (150 ml, 85.5 mmoles of Ti) and refluxed for 45 minutes, filtered, the solids washed with three 150 ml portions of hexane and dried under vacuum. The titanium content of this solid catalyst was 1.39 mmol/g.

Slurry polymerizations in n-hexane

1. Ethylene, 1-butene copolymerization

To 1.0 liter of pure dry n-hexane at 30°C was added a 1.52 M solution of triethylaluminum (1.90 ml, 2.89 mmoles), 1-butene (50 g, 0.89 moles), hydrogen (0.06 moles) and the above catalyst 0.079 g, 0.11 mmoles Ti) giving an Al/Ti ratio of 26. Ethylene addition was begun and polymerization conditions were adjusted to 80°C and 120 psig (929 kPa) total pressure. After 30 minutes, under these conditions, ethylene addition was stopped and the reactor cooled. Upon vacuum drying, a total of 195 g of polymer with a melt index (MI, $I_2$) of 53 and a density of 0.9166 g/$cm^3$ was obtained.

2. Ethylene, 1-hexene copolymerization

The copolymerization was carried out as in 1 using 2.4 ml (3.65 mmoles) of TEAL, 91 g 1-hexene (1.08 moles), hydrogen (0.033 moles) and 0.079 g (0.11 mmoles Ti), giving an Al/Ti ratio of 33. After drying, a total of 150 g of polymer with a MI of 3.95 and a density of 0.9187 g/$cm^3$ was obtained.

Comparative Example A

Several catalysts prepared substantially in accordance with the teachings of the Karol et al US—A—4,302,566 were produced and are referred to herein as "comparative A" catalysts or simply as "A" catalysts.

The comparative A catalysts are felt to be substantially equivalent to the catalysts prepared according to the Examples of the Karol et al patent. More particularly, these catalysts are felt to be substantially equivalent to those prepared by the following representative procedure.

In a 5 liter flask equipped with a mechanical stirrer, 16.0 g (0.168 Mol) of anhydrous $MgCl_2$ is mixed with 850 ml of pure tetrahydrofuran under nitrogen. The mixture is stirred at room temperature (∾25°C) while 13.05 g (0.069 mol) of $TiCl_4$ is added dropwise. After complete addition, the contents of the flask are heated to reflux for about one-half to one hour to dissolve the solids. The system is cooled to room temperature and 3 liters of pure n-hexane are slowly added over a period of one-half hour. A yellow solid precipitates. The supernatant is decanted and the solids are washed with 3× one liter of n-hexane. The solids are filtered and dried in a rotating evaporating flask at 40°—60°C to give 55 g of solid precursor composition.

The precursor composition may be analyzed at this point for Mg and Ti content since some of the Mg and/or Ti compound may have been lost during the isolation of the precursor composition. The empirical formulas used herein in reporting these precursor compositions are derived by assuming that the Mg and the Ti still exist in the form of the compounds in which they are first added to the electron donor compound and that all other residual weight in the precursor composition is due to the electron donor compound.

Analysis of the solid would typically show the following percent by weight: Mg:6.1 percent, Ti:4.9 percent; which corresponds to $TiMg_{2.45}Cl_{8.9}(THF)_{7.0}$. THF means tetrahydrofuran.

This precursor composition, which constitutes the catalytic portion of the comparative A catalyst, is supported on an inert silica carrier and activated in accordance with the teachings of the Karol et al patent.

Examples 2—8

The catalysts of Examples 2—8 were prepared in two steps and the details are summarized in Table I below. The preparation of the catalyst of Example 2 is felt to be representative of the preparation of the catalysts of Examples 3—8 and is described below:

Step A:

15 grams of Davison silica gel (dried at 200°C for 4 hours) were placed into a 500 ml 4-neck reaction flask fitted with a dropping funnel, water condensor, dry nitrogen line, and overhead stirrer. Under a slow nitrogen purge, 200 ml of dry hexane was added to the silica while stirring. The silica/hexane slurry was brought to reflux temperature and 50 ml of 2.0 M EtMgCL/THF solution was added dropwise (about 15 minutes) and the reflux was continued for an additional 30 minutes. After this time, the solvents were removed by distillation and the silica dried at ∾80°C under a nitrogen purge. Total yield, 29 grams; Mg (Theory) 3.45 mmol/g.

Step B:

15 grams of Step A reaction product (51.7 mmol of Mg) were placed into a 500 ml reaction flask (apparatus as described above). 200 ml of n-heptane containing 10.0 ml (91 mmol) of $TiCl_4$ was added to the flask while stirring. The slurry was refluxed for 45 minutes. After this time, the slurry was cooled to room temperature, transferred to a filter flask (under nitrogen), filtered, washed with four 100 ml portions of hexane and dried under nitrogen purge; Mg (found) 1.65 mmol/g, Mg (Theory) 1.67; Ti (found) 1.24 mmol/g.

In addition, for comparison purposes, Example 5 was repeated with the molar ratio of $TiCl_4$ added in Step B to the magnesium present on the silica being less than 1. The resultant catalyst and the processing details are indicated in Table I as Example 5 (Comparative).

TABLE I
Conditions used to prepare catalysts

| | | Step A | | | | | | Step B | | | | | | | | |
|---|---|---|---|---|---|---|---|---|---|---|---|---|---|---|---|---|
| | | | | | | | | | | | | | mmol/g | | | |
| Example number | Dehydration temperature °C | g Silica | [a]mmol SiOH | mmol RMg X | Mg: SiOH | Product wt (g) | Mg mmol/g (theory) | g Step (A) product | mmol Mg | mmol Ti | Added Ti:Mg | Product wt. | Mg (found) | Mg (theory) | Ti (found) | Mg/Ti (reacted) |
| 2 | 200 | 15.0 | 45 | 100 | 2.2 | 29.0 | 3.45 | 15.0 | 51.7 | 91.1 | 1.76 | 18.0 | 2.93 | 2.87 | 1.51 | 1.9 |
| 3 | 200 | 15.0 | 45 | 40 | 0.9 | 19.5 | 2.05 | 15.0 | 30.7 | 91.1 | 2.97 | 18.4 | 1.65 | 1.67 | 1.24 | 1.3 |
| 4 | 200 | 15.0 | 45 | 20 | 0.4 | 16.7 | 1.20 | 15.0 | 17.9 | 91.1 | 5.09 | 18.2 | 0.81 | 0.99 | 1.19 | 0.69 |
| 5 | 600 | 15.0 | 22 | 20 | 0.9 | 17.4 | 1.15 | 15.0 | 17.2 | 91.1 | 5.30 | 17.9 | 0.96 | 0.96 | 0.72 | 1.3 |
| 5 (Comp.) | 600 | 15.0 | 22 | 20 | 0.9 | 17.5 | 1.33 | 7.0 | 9.33 | 2.28 | 0.24 | 7.9 | 1.1 | 1.18 | 0.68 | 1.62 |
| 6 | 800 | 25.0 | 12 | 10 | 0.8 | 26.5 | 0.38 | 15.0 | 5.7 | 45.6 | 8.00 | 16.2 | 0.37 | 0.35 | 0.39 | 0.95 |
| 7 | 800 | 15.0 | 15 | 100 | 6.7 | 32.7 | 3.06 | 15.0 | 45.9 | 91.1 | 1.98 | 20.3 | 1.98 | 2.26 | 1.59 | 1.2 |

[a] Surface hydroxyl concentration of silica dried at various temperatures were taken from: J. B. Peri and A. L. Hensely, Jr., *J. Physical Chem.*, 72 (8), 2926 (1968)

Catalysts were initially tested in a 1.6 liter slurry reactor and in a representative experiment, 1.0 liter of hexane and about 100 ml of 1-hexane (62.5 g) were added to the autoclave while at ambient temperature. 0.047 g of catalyst (0.06 mmol of Ti) was slurried into about 50 ml of hexane to which was added sufficient triethyl aluminum to give an Al/Ti ratio of 40. This catalyst slurry was transferred to the reactor using slight nitrogen pressure and 0.03 moles of hydrogen were added by measuring through a calibrated Hoke bomb.

The stirring rate was adjusted to 1000 rpm and the temperature control unit set to 80°C. Ethylene pressure was introduced when the autoclave reached 40°C, and the total reactor pressure was adjusted to 115 psi (793 kPa).

Polymerizations were continued for 25—35 minutes in order to produce 130—150 grams of polymer. About 400 ppm of Irganox 1076 was added to the polymer/hexane slurry and the hexane was allowed to evaporate under a hood. The products were placed into a vacuum oven overnight at approximately 60°C to remove residual hexane and monomer.

Figure 2 shows the change in the copolymerization properties of the catalysts of Examples 2—4, as well as comparative A, as measured by resin density at the 1—3 $I_2$ melt index level over a range of magnesium loadings into Davison 952 silica dried at 200°C.

If silica dried at 800°C is used in place of silica dried at 200°C, the copolymerization properties of the catalysts may vary. It is noted that silica dried at 200°C contains about 6 SiOH groups/100 Angstrom$^2$ (6 SiOH groups/nm$^2$) while silica dried at 800°C contains only about 1 SiOH group/100 Angstrom$^2$ (1 SiOH group/nm$^2$).

Ethylene/1-butene copolymers were prepared under similar conditions with both comparative A catalyst and the Example 2 catalyst. Table II summarizes the polymerization conditions and product properties of $C_2/C_4$ copolymers prepared with A and Example 2 catalysts. Examination of the data in Table II indicates that under similar polymerization conditions the Example 2 catalyst produced a lower density product than the A catalyst.

TABLE II*
Polymerization conditions and product data for $C_2/C_4$ copolymers prepared with A and Example 2 catalysts

| Experiment No. | Conditions** Catalyst type | $H_2/C_4$ | $C_4/C_2$ | Gms Butene | Product $I_2$ g/10 m | Density g/cm$^3$ |
|---|---|---|---|---|---|---|
| 1 | A | 0.13 | 2.1 | 50 | 23 | 0.932 |
| 2 | A | 0.13 | 2.0 | 48 | 9.0 | 0.933 |
| 3 | A | 0.13 | 1.9 | 50 | 10 | 0.929 |
| 4 | Ex. 2 | 0.13 | 2.1 | 50 | 61 | 0.917 |
| 5 | Ex. 2 | 0.13 | 2.1 | 50 | 53 | 0.917 |
| 6 | Ex. 2 | 0.06 | 1.1 | 30 | 1.7 | 0.925 |
| 7 | A | 0.06 | 0.9 | 30 | 2.1 | 0.934 |
| 8 | A | 0.06 | 0.9 | 30 | 1.5 | 0.931 |
| 9 | Ex. 2 | 0.06 | 0.9 | 30 | 1.1 | 0.929 |
| 10 | A | 0.05 | 1.5 | 48 | 2.3 | 0.929 |
| 11 | Ex. 2 | 0.05 | 1.5 | 48 | 1.1 | 0.925 |
| 12 | A | 0.10 | 1.9 | 47 | 2.4 | 0.926 |
| 13 | Ex. 2 | 0.06 | 1.6 | 49 | 1.8 | 0.920 |
| 14 | A | 0.05 | 2.1 | 64 | 1.0 | 0.919 |
| 15 | A | 0.08 | 2.2 | 64 | 2.3 | 0.921 |
| 16 | Ex. 2 | 0.07 | 2.2 | 66 | 1.3 | 0.908 |
| 17 | Ex. 2 | 0.05 | 1.8 | 53 | 3.6 | 0.912 |
| 18 | Ex. 2 | 0.06 | 1.9 | 53 | 4.7 | 0.913 |
| 19 | Ex. 2 | 0.05 | 1.7 | 55 | 2.9 | 0.917 |
| 20 | Ex. 2 | 0.05 | 1.6 | 50 | 2.6 | 0.920 |

* Data illustrated in Figure 2.
** Other conditions: 80°C, 1.0 liter hexane, 1000 rpm, ∾0.08 moles of titanium in 1.6 liter reactor.

For example, comparison of experiments 1 and 5 in Table II show that the A catalyst produced a product with a density of 0.932 g/cm$^3$ while the Example 2 catalyst product exhibited a density of 0.917 g/cm$^3$. Both the A and Example 2 catalysts require comparable amounts of hydrogen to produce a product with a melt index of about 1—2 (compare experiments 8 and 9). However, at higher hydrogen levels, the Example 2 catalyst products produces a much higher melt index product than A (compare experiments 4 and 3 in Table II).

Figure 3 illustrates the copolymerization differences between the A and Example 2 catalysts. Figure 3 shows the density versus the butene/ethylene ratio for each of these catalysts.

Examination of Figure 3 suggests that a 0.918 g/cm$^3$ LLDPE product requires a $C_4/C_2$ ratio of about 2.7 for A catalyst while the Example 2 catalyst requires only a ratio of 1.7. This corresponds to 35 percent less butene in the reactor for the Example 2 catalyst.

Table III and Figure 4 summarize the polymerization conditions and product properties of the ethylene/1-hexene copolymers prepared with A, Example 2 and 3 catalysts in a 1.6 liter slurry reactor. The

Example 3 catalyst contains less magnesium and exhibits better copolymerization properties than the Example 2 catalyst.

TABLE III*

Polymerization conditions and product data for $C_2/C_6$ copolymers prepared with Ex. 3, Ex. 2 and A catalysts

| | Conditions** | | | | Product | |
|---|---|---|---|---|---|---|
| Experiment No. | Catalyst example | $H_2/C_4$ | $C_6/C_2$ | Gms butene | $I_2$ g/10 m | Density g/cm$^3$ |
| 21 | A | 0.05 | 1.0 | 49 | 1.2 | 0.937 |
| 22 | 2 | 0.05 | 1.0 | 49 | 2.9 | 0.932 |
| 23 | 3 | 0.05 | 1.2 | 60 | 1.9 | 0.920 |
| 24 | 3 | 0.05 | 1.2 | 57 | 2.4 | 0.924 |
| 25 | 3 | 0.05 | 1.3 | 64 | 2.1 | 0.918 |
| 26 | A | 0.05 | 1.6 | 75 | 1.2 | 0.935 |
| 27 | A | 0.06 | 1.7 | 87 | 1.6 | 0.933 |
| 28 | 2 | 0.05 | 1.5 | 72 | 2.2 | 0.924 |
| 29 | 3 | 0.05 | 1.7 | 86 | 3.6 | <0.905 |
| 30 | 2 | 0.05 | 2.1 | 92 | 1.2 | 0.918 |
| 31 | A | 0.05 | 2.5 | 120 | 1.9 | 0.929 |
| 32 | 3 | 0.06 | 1.8 | 91 | 3.9 | 0.919 |

* Data illustrated in Figure 4.

** Other conditions: 80°C, 1.0 liter hexane, 1000 rpm, ∾0.08 mmols of titanium in 1.6 liter reactor total pressure 120 psi (827 kPa).

Examination of Figure 4 clearly shows that the comparative copolymerization properties of these three catalysts are Example 3>Example 2>A. At a 1-hexene to ethylene ratio of about 1.3, the Example 2, Example 3 and A catalysts produced resins with densities of about 0.918 g/cm$^3$, 0.927 g/cm$^3$ and 0.935 g/cm$^3$, respectively.

The Example 3 catalyst requires about 50 percent (±10 percent) less 1-hexene in the reactor than A catalyst to produce a LLDPE material with a density of about 0.920 g/cm$^3$.

Catalysts were utilized in a two gallon (9.08 l) slurry laboratory reactor so that sufficient quantities of polymer (500—800 g) could be prepared for evaluation. Table IV and Figure 5 summarize the polymerization conditions and product properties of ethylene/1-hexene copolymers prepared with catalysts of Examples 3, 5, 6, 7 and A. Examination of Figure 5 suggests that the relative copolymerization properties of these catalysts are (Example 3, Example 5)>Example 6>Example 7>A.

TABLE IV
Polymerization conditions and product data for $C_2/C_6$ copolymers prepared in the two gallon reactor

| | Conditions | | | Product | | |
|---|---|---|---|---|---|---|
| Experiment No. | Catalyst example | g Hexene | $C_6/C_2$ | $I_2$ g/10 m | Density g/cm$^3$ | Yield g |
| 33 | 3 | 270 | 1.05 | 0.9 | 0.928 | 604 |
| 34 | 3 | 310 | 1.25 | 1.0 | 0.925 | 435 |
| 35 | 3 | 440 | 1.84 | 1.2 | 0.918 | 575 |
| 36 | 5 | 316 | 1.34 | — | 0.923 | 485 |
| 37 | 5 | 382 | 1.66 | 2.0 | 0.920 | 444 |
| 38 | 5 (Comp.) | 436 | 1.86 | 1.6 | 0.9335 | 415 |
| 39 | 5 | 380 | 1.56 | — | 0.919 | 460 |
| 40 | 7 | 671 | 28.5 | 1.7 | 0.924 | 668 |
| 41 | 6 | 391 | 1.58 | 0.4 | 0.928 | 330 |
| 42 | 6 | 412 | 1.66 | 0.2 | 0.925 | 500 |
| 43 | 6 | 405 | 1.72 | 0.4 | 0.927 | 409 |
| 44 | 6 | 438 | 1.86 | 0.6 | 0.926 | 460 |
| 45 | A | 410 | 1.68 | 0.6 | 0.935 | 506 |
| 46 | A | 441 | 1.87 | 1.0 | 0.933 | 540 |
| 47 | A | 644 | 2.74 | 0.9 | 0.929 | 655 |

Comparison of the results given in Table IV for Experiments 37 and 38 indicates the improved product density and yield obtained with the catalyst of Example 5 (added Ti:Mg of 5.3) as compared with that obtained with catalyst of Example 5 Comparison (added Ti:Mg of 0.24).

The data used for Figure 2 is summarized in Table V as follows.

TABLE V
Data used for Figure 2

| Experiment No. | Catalyst example | Gms Hexene | $C_6/C_2$ | Density | $I_2$ |
|---|---|---|---|---|---|
| 48 | A | 87 | 1.73 | .9328 | 1.65 |
| 49 | A | 76 | 1.60 | .0351 | 1.21 |
| 50 | 2 | 91 | 1.84 | .9187 | 3.95 |
| 51 | 2 | 72 | 1.53 | .9241 | 2.22 |
| 52 | 2 | 87.5 | 1.86 | .9194 | 1.50 |
| 53 | 2 | 84.5 | 1.78 | .9178 | 4.86 |
| 54 | 3 | 86 | 1.68 | <.905 | 3.59 |
| 55 | 3 | 90.5 | 1.92 | <.905 | 7.31 |
| 56 | 4 | 88 | 1.86 | .9247 | 1.04 |
| 57 | 4 | 91 | 1.93 | .9253 | 2.86 |

The performance of scaled up version of the catalyst of Example 6 (essentially the same as the aforementioned version except that the Mg loading in step A is 0.53 mmoles of g instead of 0.38 mmole/g) and A catalysts were compared under nearly identical operating conditions in a fluidized-bed, pilot reactor. This comparison was accomplished keeping two important operating variables constant, namely temperature, and the molar ratio of hexene to ethylene in the gas phase, and then observing the physical properties of the resin product under these comparable conditions.

The experiments were done in a pilot-scale fluidized-bed reactor 18 inches (45.7 cm) in diameter and capable of producing up to 50 lb/hr (22.7 kg/hr) of resin. The catalysts used for the comparison were A and the catalyst of Example 6 which was prepared at a pilot plant. The only difference between the pilot plant preparation of the catalyst of Example 6 and the laboratory procedure (described earlier) was that a solvent decantation followed by several solvent washes was substituted for the filtration in Step B. Details of the comparison are found in Table VI, and support the slurry reactor findings that the catalyst of Example 6 has significantly improved copolymerization properties compared to A when run under similar reactor conditions.

TABLE VI
Comparison of Ex. 6 and a in a gas phase reactor

| | Ex. 6* | | A |
|---|---|---|---|
| | Experiment 1 | Experiment 2 | Experiment 1 |
| Reaction temperature | 85°C | 85°C | 85°C |
| Hexene/ethylene molar ratio in gas phase | .123 | .107 | .11—.12 |
| Hydrogen/ethylene molar ratio in gas phase | .207 | .209 | .21—.22 |
| Physical properties | | | |
| Melt index | 1.69 | 1.28 | 1.6 |
| Density | .9201 | .9247 | 0.934 |

* [Mg]=0.53 mmol/g; [Ti]=0.50 mmol/g.

Comparative Example B

The catalyst of this Comparative Example was prepared in accordance with Example 7 of the Yamaguchi et al US—A—3,989,881. One will readily note the similarities between this comparative

Example B catalyst composition and the catalytically active precursor composition described in the Karol et al US—A—4,302,566, e.g., exemplified in the passage extending from line 65 of column 14 to line 26 of column 15.

The particular procedure used to prepare the catalyst of comparative Example B is as follows.

15 g (158 mmol) of anhydrous magnesium chloride, $MgCl_2$, was slurried in 530 ml dry tetrahydrofuran (THF) in a one liter 3-necked round-bottomed flask fitted with a magnetic stirrer.

10 g (52.7 mmol) of $TiCl_4$ were added dropwise while heating. The mixture was refluxed for approximately one hour, by which time all solids had dissolved. After cooling, 275 ml hexane were added dropwise at 5 ml/minute to precipitate the solids. The mother-liquors were decanted and the solid washed with two 200 ml portions of hexane by decantation, and dried. The yellow solid contained 3.08 mmol Mg and 0.95 mmol Ti/g catalyst.

Examples 8—9

All procedures were carried out in glass or quartz equipment under purified nitrogen using predried nitrogen purged solvents.

Davison silica gel, Grade 952, was dehydrated by fluidizing with nitrogen, heating at 800°C for 16 hours and cooled to room temperature under nitrogen.

A portion of the activated silica, as given in Table IX, was introduced into a 500 ml 4-necked round-bottomed flask fitted with a stirrer, thermometer, addition funnel, dry nitrogen line and a distillation head to remove solvent. The flask was placed in an oil bath maintained at a controlled temperature.

250 ml hexane was added to the silica while stirring under a slow nitrogen purge. The silica/hexane slurry was brought to reflux temperature and a 2.0 M solution of ethylmagnesium chloride in THF added dropwise over 5—15 minutes. The reflux was continued for an additional 30—40 minutes. After a total of 45 minutes the solvents were removed by distillation and the silica dried at approximately 80°C under a nitrogen purge. 15 g of this product was slurried in 45.5 mmol of $TiCl_4$ dissolved in 200 ml n-heptane, and the slurry refluxed for 45 minutes, using the same apparatus as described above. The mixture was allowed to cool to room temperature, transferred to a filter flask under $N_2$ and filtered. The solids were washed with three to four 100—150 ml portions of hexane and dried under a nitrogen purge. A free flowing yellow powder was obtained. Analyses for Ti and Mg are given in Table VII.

Comparative Example C

A catalyst was prepared in substantially the same manner as described for Examples 8 and 9 except that the silica support was omitted. Further details are given in Table VII. It is noted that the formation of a small amount of precipitate as evidenced by cloudiness was noticed as Grignard was added to hexane. This observation would have been masked if silica were present as a hexane slurry.

Examples 10—11

Catalysts prepared in the pilot plant were scaled up directly from laboratory preparations, except that decantation had to be used to wash the final catalyst rather than filtration, as described above.

Further preparation details are given in Table VII.

TABLE VII
Details of catalyst preparation

| Example Number | $SiO_2$* (g) | $MgCl_2$ (mmol) | EtMgCl/THF (mmol) | $TiCl_4$ (mmol) | Analysis (mmols/g final cat.) Mg | Ti | Mg/Si-OH*** |
|---|---|---|---|---|---|---|---|
| 8 | 25 | — | 10.0 | 45.5** | 0.37 | 0.39 | 0.77 |
| 9 | 17 | — | 20.0 | 45.5** | 0.92 | 0.81 | 2.26 |
| 10 | 602 | — | 400 | 1821 | 0.53 | 0.50 | 1.28 |
| 11 | 500 | — | 400 | 1593 | 0.75 | 0.54 | 1.54 |
| B | — | 157.4 | — | 52.8 | 3.66 | 0.95 | — |
| C | — | — | 20.0 | 45.5 | — | 1.42 | — |

* $SiO_2$ dried at 800°C for 16 hours.
** The given amount of $TiCl_4$ was reacted with 15 g of the $SiO_2$/EtMgCl reaction product.
*** [Si-OH] of $SiO_2$=0.52 mmol/g.

A two gallon autoclave was heated under a pure nitrogen purge to about 90°C for 0.5 hour to clean out remaining moisture, and then cooled to ambient temperature.

Five liters of prepurified hexane and the desired amount of 1-hexene were added to the reactor and the mixture stirred at approximately 900 rpm. The catalyst was activated in a catalyst addition flask by adding an amount of 25 weight percent triethylaluminum in hexane to a given weight of catalyst suspended in 50 ml of dry hexane. Amounts used are given in Tables VIII and IX. The mixture was pressured into the reactor using nitrogen and the total reactor pressure adjusted to 20 psig (239 kPa) with hydrogen. The reactor was heated at 3°C/minute with a set-point at 80°C. Ethylene was introduced at 60°C so as to maintain total operating pressure at 120 psig (929 kPa). Polymerizations were carried out for approximately one hour, giving 450—950 g of polymer.

TABLE VIII
Comparison of Ex. 8 catalyst with B and C

| Run identification | | Polymerization conditions** | | | | | | Product obtained | | |
|---|---|---|---|---|---|---|---|---|---|---|
| Catalyst Ex. No. | Run No. | Cat. wt. (g) | $H_2$ (psi) [kPa] | Total P (psig) [kPa] | TEAL* (mmol) | Al/Ti ratio | Hexene (g) | Density ($g/cm^3$) | $I_2$ (g/10 m) | Yield (g) run time (hrs) |
| 8 | 1 | 0.50 | 15 [103] | 120 [929] | 7.6 | 39 | 412 | 0.9250 | 0.2 | 500 (1.0) |
| | 2 | 0.70 | 25 [172] | 120 [929] | 10.8 | 40 | 550 | 0.9237 | 1.1 | 560 (0.8) |
| | 3 | 0.73 | 25 [172] | 122 [942] | 11.4 | 40 | 622 | 0.9216 | 1.0 | 537 (0.5) |
| B | 4 | 0.197 | 15 [103] | 105 [825] | 7.1 | 38 | 417 | 0.9322 | 0.12 | 450 (2.0) |
| | 5 | 0.151 | 20 [138] | 110 [860] | 6.0 | 42 | 644 | 0.9292 | 0.90 | 655 (1.0) |
| C | 6 | 0.160 | 25 [172] | 120 [929] | 9.1 | 41 | 449 | 0.9379 | 0.86 | 525 (2.0) |

* 25 weight percent triethylaluminum in hexane=1.54 *M*.
** Polymerization temperature: 80°C.

TABLE IX
Effect of Mg loading on copolymerization

| Example No. | Mg (mmol/g) | Mg:SiOH [d] | Cat. wt. (g) | $H_2$ (psi) [kPa] | Total P (psig) [kPa] | TEAL[b] (mmol) | Al/Ti ratio | Hexene (g) | Density (g/cm³) | $I_2$ (g/10 m) | Yield (g) run (hrs) |
|---|---|---|---|---|---|---|---|---|---|---|---|
| 8 | 0.37 | 0.77 | 0.51 | 15 [103] | 120 [929] | 8.0 | 40 | 438 | 0.9274 | 0.40 | 460 (0.9) |
| 9 | 0.92 | 2.26 | 0.81 | 15 [103] | 120 [929] | 12.3 | 19 | 446 | 0.9162 | 1.73 | 950 (0.6) |
| 10 | 0.53 | 1.28 | 0.80 | 15 [103] | 120 [929] | 12.3 | 31 | 451 | 0.9252 | 0.34 | 821 (1.0) |
| 11 | 0.75 | 1.54 | 0.80 | 15 [103] | 120 [929] | 12.3 | 28 | 451 | 0.9239 | 0.76 | 883 (0.6) |
| B | 3.08[c] | — | 0.197 | 15 [103] | 105 [929] | 7.1 | 38 | 4.17 | 0.9322 | 0.12 | 450 (2.0) |

[a] 80°C; 5.0 liters hexane.
[b] 25 wt. percent triethylaluminum in hexane=1.54 *M*.
[c] Unsupported.
[d] Surface hydroxyl concentration of silica dried at 800°C taken as 0.5 mmol/g. See J. B. Peri and A. L. Hensley, Jr., *J. Phys. Chem.*, 72 (8), 2926 (1968).

The catalyst of Example 10 was used in a pilot plant, gas phase, fluid bed reactor operating at 85°C to copolymerize hexene/ethylene at a $H_2/C_2$ mole ratio of 0.212 and $C_6/C_2$ mole ratio of 0.126.

Activation of the catalyst was carried out in the fluid bed reactor using a 5 weight percent solution of triethylaluminum in isopentane sufficient to give an Al/Ti molar ratio in the reactor of 20—50 and the polymerization was allowed to reach equilibrium under continuous operation. The product obtained had a density of 0.920 g/cm$^3$ and a melt index $I_2$=1.69 g/10 m.

As used herein, the term "magnesium" will be understood to connote, especially, chemically combined forms of magnesium as opposed to merely uncombined, elemental forms thereof.

**Claims**

1. A process for preparing a catalyst for use in the production of linear low density polyethylene, comprising the steps of:

a) transferring magnesium from a liquid medium onto a solid porous carrier in contact with the liquid medium, the carrier containing reactive, surface hydroxyl groups, the liquid medium containing at least one organomagnesium composition having the empirical formula $R_nMgR'_{(2-n)}$, where R is a stable organic moiety and R' is a stable organic moiety or a halogen atom, and n is a rational number between 0.5 and 2, the number of moles of magnesium in said liquid medium exceeding the number of moles of reactive hydroxyl groups in the carrier, and the magnesium being transferred in chemically combined form onto the carrier by reaction between the organomagnesium composition and the surface hydroxyl groups and by precipitation onto the carrier to produce a supported magnesium composition, and

b) reacting the supported magnesium composition produced in step (a) with at least one tetravalent titanium compound in a liquid medium such that the molar ratio of the titanium compound in the liquid medium to the magnesium in the supported magnesium composition is greater than unity, the tetravalent titanium compound being soluble in said liquid medium, and said supported magnesium composition being insoluble in said liquid medium, the reaction producing on said carrier a reacted form of titanium which is insoluble in said liquid medium.

2. A process as claimed in claim 1 wherein the ratio of the number of moles of magnesium in said liquid medium of step (a) to the number of moles of reactive hydroxyl groups is 1.1 to 2.5.

3. A process as claimed in claim 1 or claim 2, wherein the organomagnesium compound is a Grignard reagent.

4. A process as claimed in any preceding claim wherein the organomagnesium compound is ethylmagnesium chloride.

5. A process as claimed in any preceding claim wherein the ratio of the number of moles of titanium present in the liquid medium of step (b) to the number of moles of magnesium on the supported magnesium composition is 3 to 6.

6. A process as claimed in any preceding claim wherein the carrier is silica, alumina or a combination thereof.

7. A process as claimed in any preceding claim wherein the carrier is silica which has been heated prior to step (a) to 750—850°C to remove water therefrom so that the concentration of reactive, surface hydroxyl groups is 0.3 to 0.7 mmol/gm of the silica.

8. A method of producing a linear low density polyethylene polymer selected from ethylene/1-butene copolymers, ethylene/1-hexene copolymers, ethylene/1-butene/1-hexene terpolymers, ethylene/propylene/1-hexene terpolymers and ethylene/propylene/1-butene terpolymers, said process comprising conducting the polymerization in the presence of catalyst prepared by a proces as claimed in any preceding claim.

9. A method as claimed in claim 8 wherein said polymer is a ethylene/hexene-1 copolymer and has a density of 0.93 g/cc or less.

**Patentansprüche**

1. Verfahren zur Herstellung eines Katalysators zur Verwendung bei der Herstellung von Polyethylen niederer Dichte, welches die Stufen umfaßt:

a) Übertragen von Magnesium aus einem flüssigen Medium auf einen festen porösen Träger in Kontakt mit dem flüssigen Medium, wobei der Träger reaktive Oberflächenhydroxylgruppen hat, das flüssige Medium zumindest eine Organomagnesiumzusammensetzung mit der empirischen Formel $R_nMgR'_{(2-n)}$ enthält, worin R eine stabile organische Komponente und R' eine stabile organische Komponente oder ein Halogenatom ist und n eine Rationalzahl zwischen 0,5 und 2 ist, wobei die Molzahl von Magnesium in dem flüssigen Medium die Molzahl der reaktiven Hydroxylgruppen in den Träger übersteigt und das Magnesium auf dem Träger in chemisch gebundener Form durch Reaktion zwischen der Organomagnesiumzusammensetzung und den Oberflächenhydroxylgruppen und durch Fällung auf dem Träger übertragen wird, um eine Magnesiumträgerzusammensetzung herzustellen, und

b) Reaktion der in Stufe (a) hergestellten Magnesiumträgerverbindung mit mindestens einer 4-wertigen Titanverbindung in einem flüssigen Medium, so daß das Molverhältnis der Titanverbindung in dem flüssigen Medium zu Magnesium in der Magnesiumträgerzusammensetzung größer als 1 ist, wobei die 4-wertige Titanverbindung in dem flüssigen Medium löslich ist und die Magnesiumträgerzusammensetzung in dem flüssigen Medium unlöslich ist, wobei die Reaktion auf dem Träger eine reagierte Form von Titan bildet, die in dem flüssigen Medium unlöslich ist.

2. Verfahren nach Anspruch 1, worin das Verhältnis der Molzahl von Magnesium in dem flüssigen Medium von Stufe (a) zu der Molzahl der reaktiven Hydroxylgruppen 1,1 bis 2,5 beträgt.

3. Verfahren nach Anspruch 1 oder 2, worin die Organomagnesiumverbindung ein Grignard-Reagenz ist.

4. Verfahren nach einem der vorstehenden Ansprüche, worin die Organomagnesiumverbindung Ethylmagnesiumchlorid ist.

5. Verfahren nach einem der vorstehenden Ansprüche, worin das Verhältnis der Molzahl von Titan, das in dem flüssigen Medium von Stufe (b) vorhanden ist, zur Molzahl von Magnesium auf der Magnesiumträgerzusammensetzung 3 bis 6 beträgt.

6. Verfahren nach einem der vorstehenden Ansprüche, worin der Träger Siliciumdioxid, Aluminiumoxid oder eine Kombination davon ist.

7. Verfahren nach einem der vorstehenden Ansprüche, worin der Träger Siliciumdioxid ist, das vor der Stufe (a) auf 750 bis 850°C erwärmt wurde, um das Wasser daraus zu entfernen, so daß die Konzentration der reaktiven Oberflächenhydroxylgruppen 0,3 bis 0,7 mmol/g Siliciumdioxid beträgt.

8. Verfahren zur Herstellung von Polyethylenpolymer niederer Dichte, ausgewählt aus Ethylen/1-Buten-Copolymeren, Ethylen/1-Hexen-Copolymeren, Ethylen/1-Buten/1-Hexen-Terpolymeren, Ethylen/Propylen/1-Hexen-Terpolymeren und Ethylen/Propylen/1-Buten-Terpolymeren, wobei das Verfahren das Durchführen der Polymerisation in Gegenwart eines Katalysators umfaßt, der durch ein Verfahren nach einem der vorstehenden Ansprüche hergestellt wurde.

9. Verfahren nach Anspruch 8, worin das Polymer ein Ethylen/Hexen-1-Copolymer ist und eine Dichte von 0,93 g/cm$^3$ oder weniger hat.

**Revendications**

1. Procédé pour préparer un catalyseur destiné à servir à la production de polyéthylène linéaire à basse densité, comprenant les étapes consistant:

a) à transférer du magnésium d'un milieu liquide sur un support poreux solide en contact avec le milieu liquide, le support contenant des groupes hydroxyle réactifs en surface, le milieu liquide contenant au moins une composition d'organomagnésium répondant à la formule brute $R_nMgR'_{(2-n)}$, dans laquelle R représente un fragment organique stable et R' représente un fragment organique stable ou un atome d'halogène, et n est un nombre rationnel compris entre 0,5 et 2, le nombre de moles de magnésium dans ledit milieu liquide excédant le nombre de moles de groupes hydroxyle réactifs dans le support, et le magnésium étant transféré sous forme chimiquement combinée sur le support par réaction entre la composition d'organomagnésium et les groupes hydroxyle de surface et par précipitation sur le support pour produire une composition de magnésium sur support, et

b) à faire réagir la composition de magnésium sur support produite à l'étape (a), avec au moins un composé de titane tétravalent dans un milieu liquide de manière que le rapport molaire du composé de titane dans le milieu liquide au magnésium dans la composition de magnésium sur support soit supérieur à l'unité, le composé de titane tétravalent étant soluble dans ledit milieu liquide, et ladite composition de magnésium sur support étant insoluble dans ledit milieu liquide, la réaction produisant sur ledit support une forme de titane ayant réagi, qui est insoluble dans ledit milieu liquide.

2. Procédé selon la revendication 1, dans lequel le rapport du nombre de moles de magnésium dans le milieu liquide à l'étape (a) au nombre de moles de groupes hydroxyle réactifs se situe entre 1,1 et 2,5.

3. Procédé selon la revendication 1 ou la revendication 2, dans lequel le composé d'organomagnésium est un réactif de Grignard.

4. Procédé selon l'une quelconque des revendications précédentes, dans lequel le composé d'organomagnésium est le chlorure d'éthylmagnésium.

5. Procédé selon l'une quelconque des revendications précédentes, dans lequel le rapport entre le nombre de moles de titane présent dans le milieu liquide à l'étape (b) au nombre de moles de magnésium sur la composition de magnésium sur support se situe entre 3 et 6.

6. Procédé selon l'une quelconque des revendications précédentes, dans lequel le support est de la silice, de l'alumine ou une de leurs combinaisons.

7. Procédé selon l'une quelconque des revendications précédentes, dans lequel le support est de la silice qui a été chauffée avant l'étape (a), jusqu'à 750°—850°C pour en enlever l'eau de sorte que la concentration des groupes hydroxyle réactifs de surface soit de 0,3 à 0,7 mmole/g de silice.

8. Procédé pour produire un polymère de type polyéthylène linéaire à basse densité choisi parmi des copolymères éthylène/1-butène, des copolymères éthylène/1-hexène, des terpolymères éthylène/1-butène/1-hexène, des terpolymères éthylène/propylène/1-hexène et des terpolymères éthylène/propylène/1-butène, ledit procédé comprenant la conduite de la polymérisation en présence d'un catalyseur préparé par un procédé selon l'une quelconque des revendications précédentes.

9. Procédé selon la revendication 8, dans lequel ledit polymère est un copolymère éthylène/hexène-1 ayant une masse volumique égale ou inférieure à 0,93 g/cm$^3$.

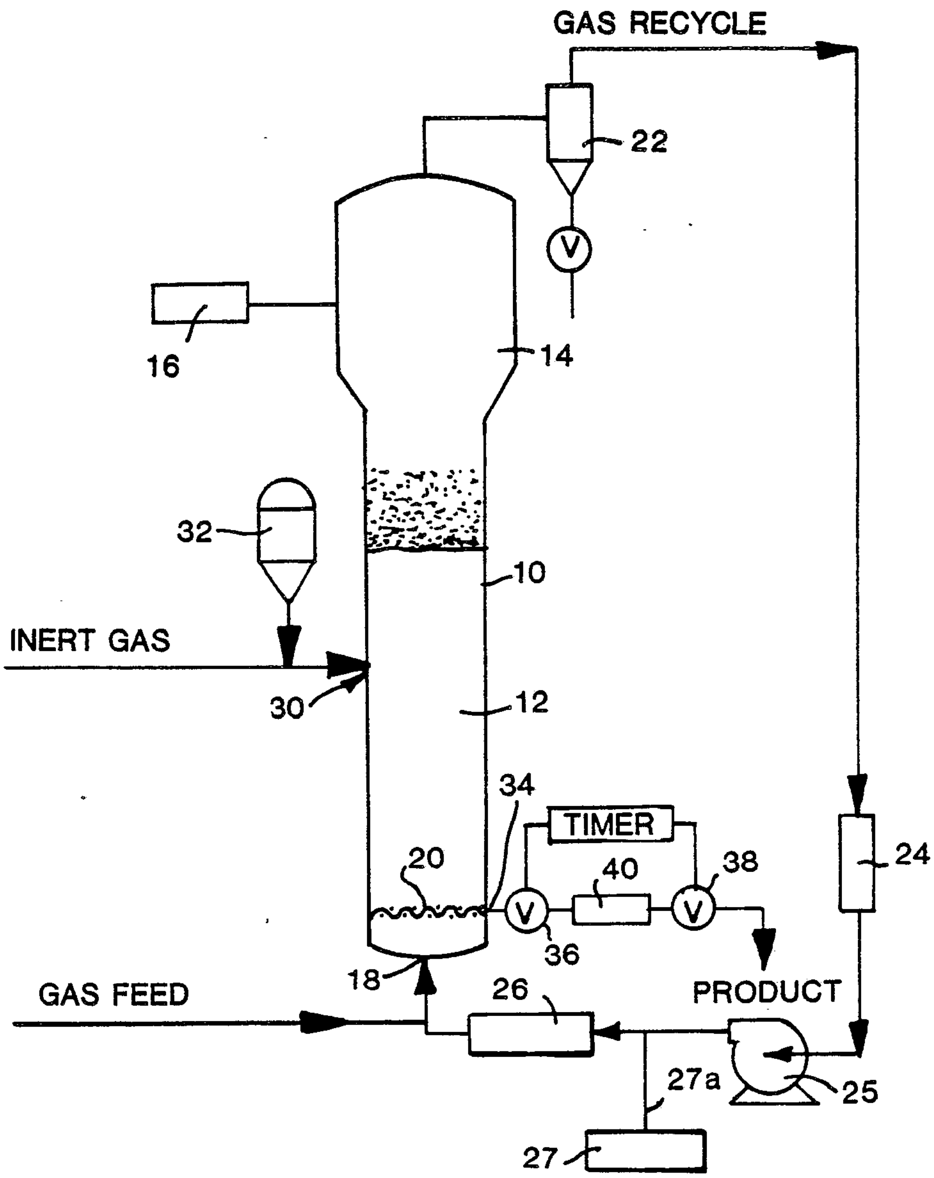
GAS RECYCLE
22
V
16
14
32
10
INERT GAS
30
12
34
TIMER
40
38
20
V
V
24
36
18
PRODUCT
GAS FEED
26
27a
25
27

FIG. 1

FIG. 2

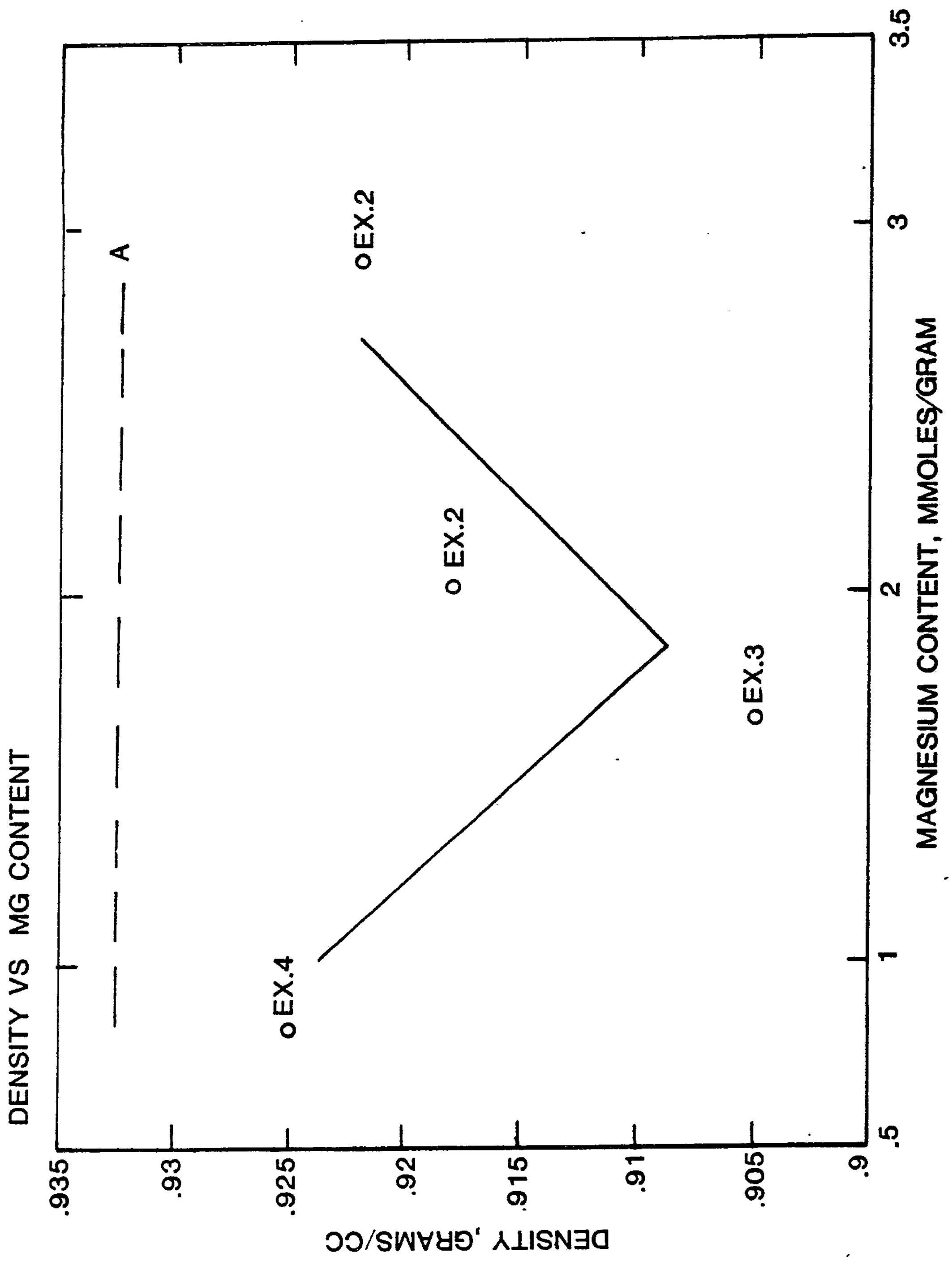
DENSITY VS MG CONTENT
DENSITY ,GRAMS/CC
.935
.93
.925
.92
.915
.91
.905
.9
MAGNESIUM CONTENT, MMOLES/GRAM
.5
1
2
3
3.5
A
EX.2
EX.2
EX.3
EX.4

FIG. 3

DENSITY VS C4/C2 RATIO

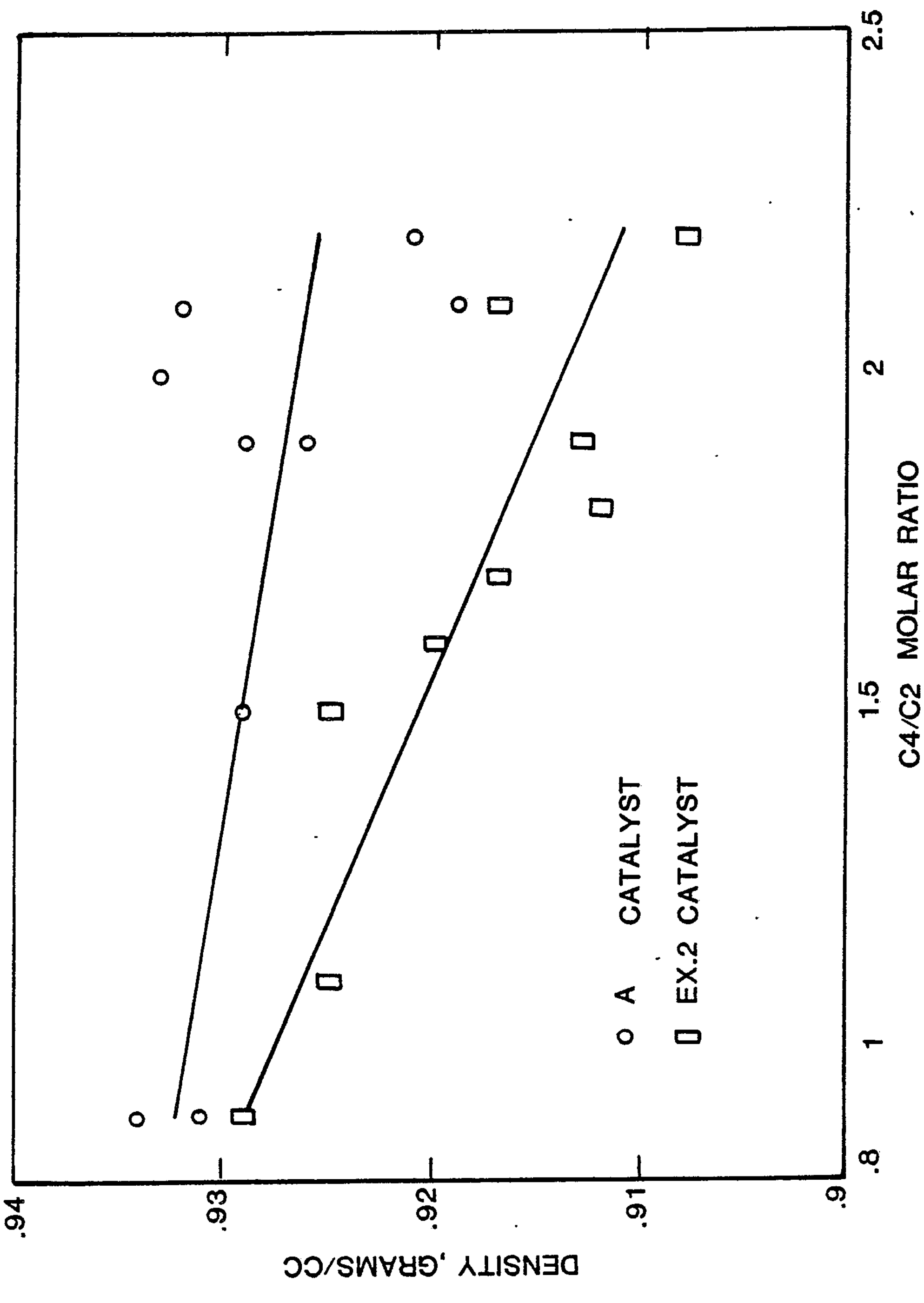

FIG. 4

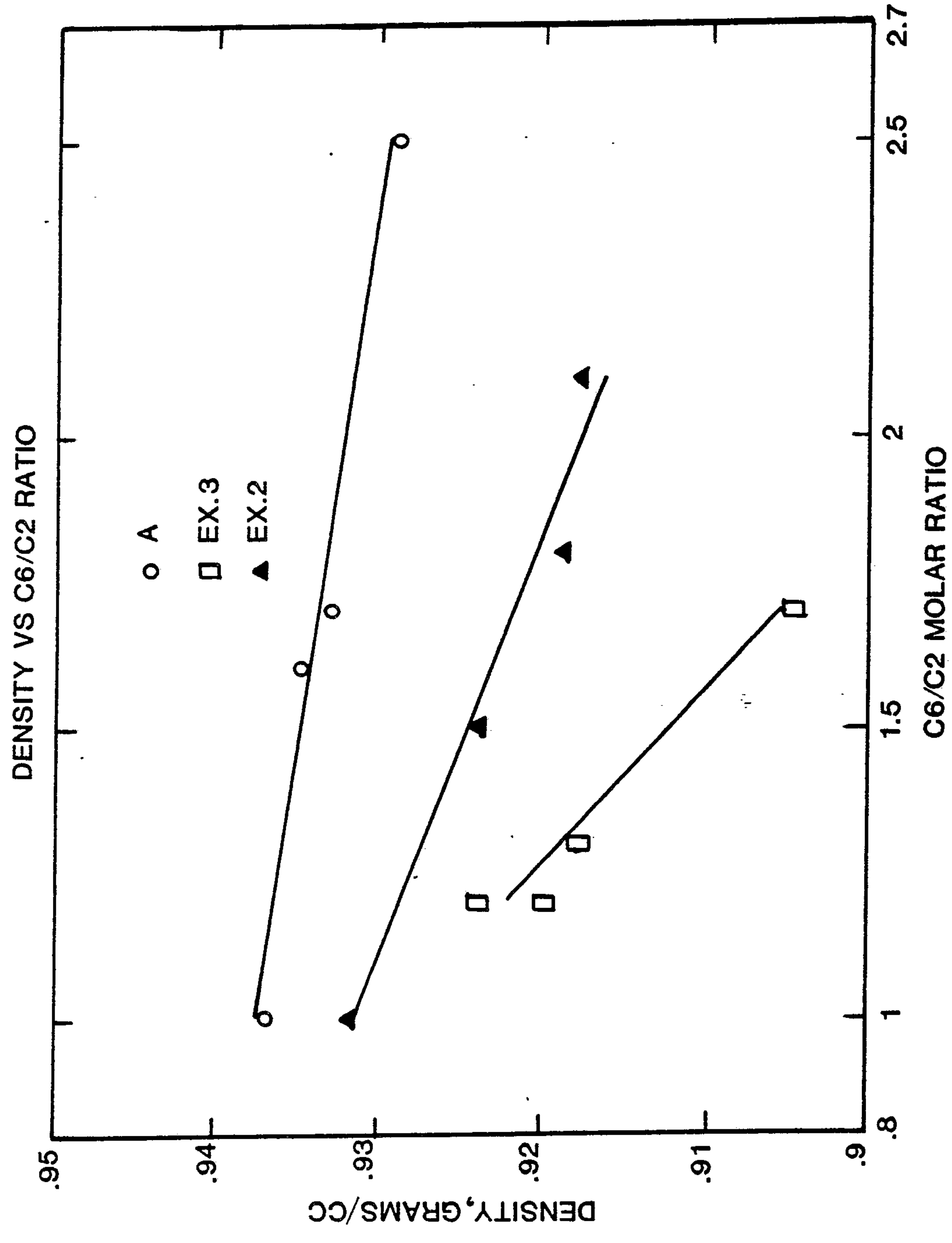

DENSITY VS C6/C2 RATIO
A
EX.3
EX.2
DENSITY, GRAMS/CC
.95
.94
.93
.92
.91
.9
C6/C2 MOLAR RATIO
.8
1
1.5
2
2.5
2.7

FIG. 5

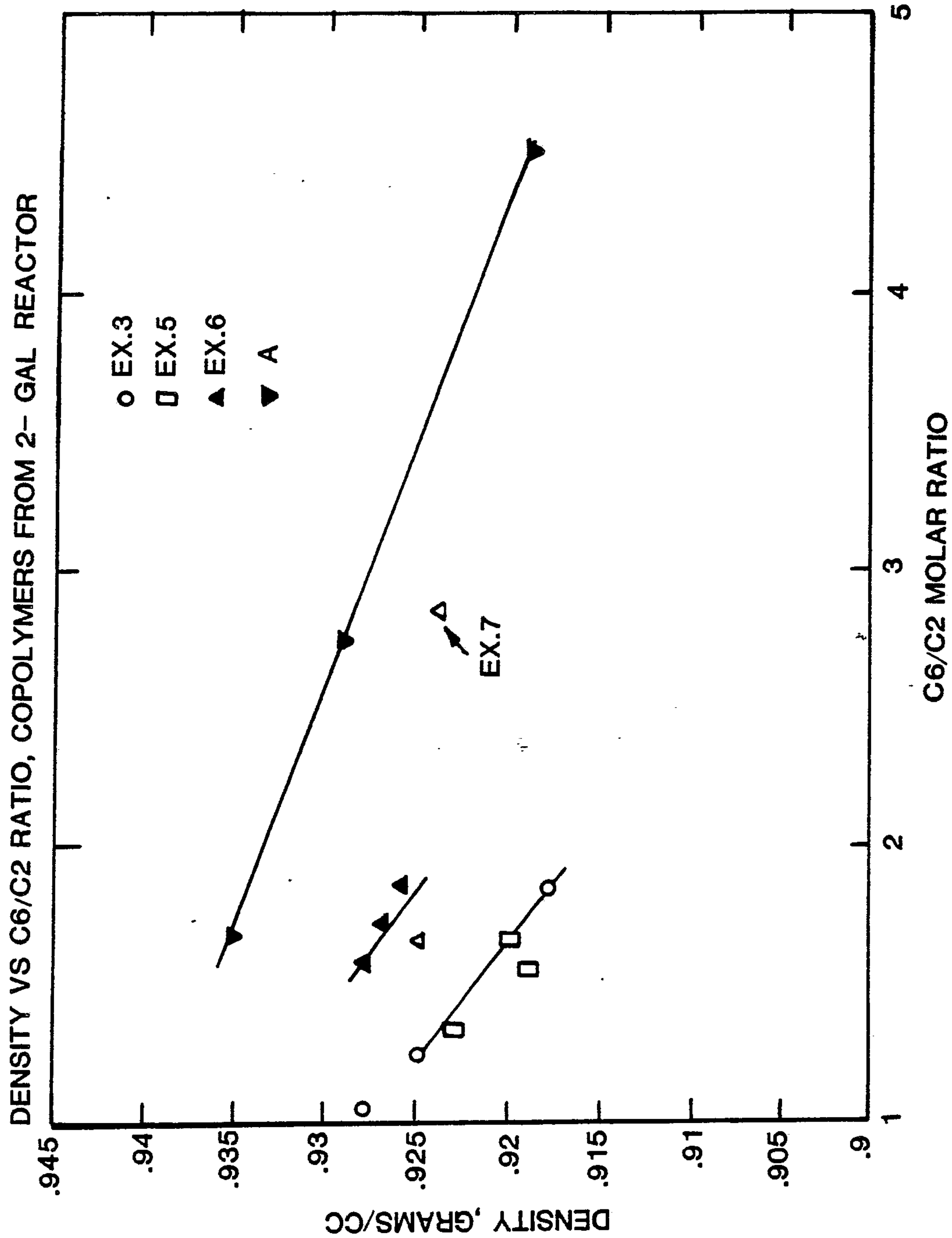
DENSITY VS C6/C2 RATIO, COPOLYMERS FROM 2- GAL REACTOR
DENSITY ,GRAMS/CC
.945
.94
.935
.93
.925
.92
.915
.91
.905
.9
1
2
3
4
5
C6/C2 MOLAR RATIO
o EX.3
▯ EX.5
▲ EX.6
▼ A
EX.7